# EUROPÄISCHE PATENTSCHRIFT

(11) **EP 2 961 693 B1**
(45) Veröffentlichungstag und Bekanntmachung des Hinweises auf die Patenterteilung: **01.04.2020**
(21) Anmeldenummer: 14706772.2
(22) Anmeldetag: 06.02.2014
(51) Int. Cl.: F24F 6/00, F24F 3/16, C02F 1/04, F26B 17/00, F24F 6/06

(54) **VORRICHTUNG ZUM VERDUNSTEN VON ABWASSER UND ZUR ABSCHEIDUNG VON SCHMUTZ IM WASSER**
DEVICE FOR EVAPORATING WASTE WATER AND FOR REMOVAL OF DEBRIS IN WATER
APPAREIL POUR EVAPORATION D'EAU RÉSIDUELLE ET POUR SÉPARER LES RESIDUS DANS L'EAU

(30) Priorität: 28.02.2013 DE 102013003320
(43) Veröffentlichungstag der Anmeldung: 06.01.2016
(73) Patentinhaber: Terrawater GmbH, 24148 Kiel (DE)
(72) Erfinder: SCHLICKUM, Till, 24107 Kiel (DE); ALTEGOER, Dietmar, 58452 Witten (DE); RITZINGER, György, 58300 Wetter (DE)
(74) Vertreter: Lobemeier, Martin Landolf
(86) Internationale Anmeldenummer: PCT/DE2014/100037
(87) Internationale Veröffentlichungsnummer: WO 2014/131395

(56) Entgegenhaltungen:
- WO-A1-2010/082204
- CH-A5- 645 277
- FR-A1- 2 704 446
- GB-A- 598 355
- US-A- 3 744 772

## Beschreibung

Die Erfindung betrifft einen Luftbefeuchter mit einem Wasserverteiler mit einem dem Wasserverteiler Wasser zuführenden Wasseranschluss und wenigstens einer Wasser abführenden Wasserverteilungsöffnung, und wenigstens einem sich vom Wasserverteiler erstreckenden, aus der wenigstens einen Wasserverteilungsöffnung Wasser aufnehmenden Befeuchtungselement.

Ein derartiger Luftbefeuchter ist beispielsweise im Rahmen eines Befeuchtungswärmetauschers aus der DE 10 2008 031 586 B3 bekannt, wobei derartige Befeuchtungswärmetauscher für Klimaanlagen oder auch zur Wasseraufbereitung verwendet werden. Weitere Luftbefeuchter gehen aus der DE 72 30 055 U, der DE 947 156 B und der US 4 240 991 A hervor. Die US 3 744 772 A1 offenbart einen Luftbefeuchter gemäß dem Oberbegriff von Anspruch 1.

Insbesondere bei der Aufbereitung von Abwasser stellt sich nun das Problem, dass die Befeuchtungselemente aufgrund der mit dem Abwasser mitgeführten Schmutzfracht einer starken Verschmutzung unterliegen und in regelmäßigen Abständen aufwändig gereinigt werden müssen.

Aufgabe der vorliegenden Erfindung ist es daher, einen Luftbefeuchter zu schaffen, der eine Verschmutzung der Befeuchtungselemente weitgehend verhindert, zumindest aber eine einfache Reinigung erlaubt.

Diese Aufgabe wird durch den Luftbefeuchter mit den Merkmalen von Anspruch 1 gelöst.

Die Unteransprüche geben vorteilhafte Ausgestaltungen der Erfindung wieder.

Grundgedanke der Erfindung ist es, die Befeuchtungselemente permanent, periodisch oder für einen vorbestimmten Zeitraum mechanischem Stress auszusetzen, sodass sich weniger Partikel an den Befeuchtungselementen absetzen bzw. von diesen abgetragen werden. Dieses erfolgt erfindungsgemäß durch einen auf die Befeuchtungselemente mechanischen Stress auswirkenden Aktuator. Dieser Aktuator ist bevorzugt mit den Befeuchtungselementen verbunden und weist einen Antrieb zur Ausführung oszillierender Bewegungen auf. Durch oszillierende Bewegung des Aktuators werden auch die Befeuchtungselemente in oszillierende Bewegung versetzt, sodass sich weniger Partikel an den Befeuchtungselementen absetzen werden.

Nach einer erfindungsgemäßen Ausgestaltung, die neben den Befeuchtungselementen angeordnete Rotoren aufweist, wird dieser mechanische Stress einerseits durch die sich drehenden Rotoren indirekt auf die Befeuchtungselemente durch Übertragung von den Rotoren inhärenter Vibration, andererseits durch in direktem Kontakt der Rotorblätter mit den Befeuchtungselementen wirkende Scherkräfte bewirkt.

Die den Rotoren inhärente Vibration kann einerseits durch die von den Rotoren, insbesondere deren Rotorblättern erzeugte Luftbewegung auf die Befeuchtungselemente übertragen werden. Andererseits kann die den Rotoren inhärente Vibration durch Körperschall auf die Befeuchtungselemente übertragen werden, z.B. dadurch, dass die Befeuchtungselemente und die Rotoren in einem gemeinsamen Rahmen, beispielsweise dem Gehäuse des Luftbefeuchters, gelagert sind.

Bevorzugt ist eine Mehrzahl von Rotoren vorgesehen. Bei einer Mehrzahl von Rotoren kann entweder vorgesehen sein, dass ein einziger Antrieb über entsprechende Getriebe eine Mehrzahl von Rotoren mit gleicher Rotationsgeschwindigkeit antreibt oder alternativ ist eine Mehrzahl von Antrieben vorgesehen, wobei je ein Antrieb je einen Rotor oder eine Gruppe von Rotoren antreibt.

Durch bevorzugt separat gesteuerte Antriebe der Rotoren können die einzelnen Bereiche des Luftbefeuchters separat abgereinigt werden. So kann beispielsweise mittels einer Steuerung geregelt sein, dass zuerst der untere Bereich der Befeuchtungselemente gereinigt und dann die Reinigung der darüber befindlichen Bereiche nacheinander hinzugeschaltet wird. Dadurch kann einer Verstopfung des unteren Bereiches vorgebeugt werden.

Besonders bevorzugt überschneiden sich die von den Rotoren überstrichenen Flächen, sodass alle Bereiche der Befeuchtungselemente gereinigt und keine Stellen ausgespart werden.

Die Abreinigung der Befeuchtungselemente erfolgt bei den als direkt auf die Befeuchtungselemente wirkende Schaber ausgebildeten Rotoren durch langsames Drehen der Rotoren. Die Rotorblätter weisen bevorzugt abgerundete Ecken auf und sind besonders bevorzugt elastisch verformbar ausgebildet.

Die von den Befeuchtungselementen abfallenden Partikel werden bevorzugt in einer unterhalb der Befeuchtungselemente angeordneten Wanne gesammelt und entsorgt. Die Entsorgung kann automatisch mittels eines Förderbands, Kratzbodens etc. oder manuell erfolgen.

Um eine Verletzung der regelmäßig als Kunststofffolienbefeuchter verwendeten Befeuchtungselemente durch die Rotoren bzw. deren Rotorblätter zu verhindern, sind die Rotoren bzw. die Rotorblätter derart strukturiert, dass diese eine große Oberfläche aufweisen und bevorzugt in alle Richtungen flexibel ausgestaltet sind. So kann bis zu einem vorbestimmten Grad eine "sanfte" Verformung der Befeuchtungselemente erfolgen, ohne dass der auf die Befeuchtungselemente wirkende mechanische Stress zu einer Beschädigung der Befeuchtungselemente führt.

Durch die Drehung von Rotoren wird zudem die Bildung von Wasserkanälen an den Befeuchterflächen verhindert, so dass die Verdunstungsoberfläche optimal gleichmäßig befeuchtet werden kann.

Bevorzugt ist auch vorgesehen, dass zwischen Wasserverteiler und Befeuchtungselementen innerhalb des Radius des Rotors elastisch verformbare Verteilerplatten vorgesehen sind. Diese Verteilerplatten sind zur weiteren Wasserverteilung schräg angeordnet und fächern den durch die Wasserverteilungsöffnungen des Wasserverteilers geführten Wasserstrahl auf. Diese Platten können in direktem Kontakt mit den darunter liegenden Verdunsteroberflächen stehen. Um eine Verkrustung dieser Platten zu vermeiden werden diese durch die sich drehenden Rotoren bei Kontakt derart verformt, dass sich keine Feststoffe an diesen anlagern können.

Die Rotoren bzw. deren Rotorblätter sind bevorzugt derart geformt, dass die äußere Kante des Rotorblatts rund geformt ist, so dass sich die Rotorblätter nicht in den Verdunsteroberflächen verhaken können. Des Weiteren kann die Rotorblattfläche bevorzugt mit Löchern versehen sein, um die an den Verdunsteroberflächen anhaftenden Feststoffe abzuschaben und durch die Löcher abzuführen.

## Patentansprüche

1. Luftbefeuchter mit
- einem Wasserverteiler mit einem dem Wasserverteiler Wasser zuführenden Wasseranschluss und wenigstens einer Wasser abführenden Wasserverteilungsöffnung,
- wenigstens einem sich vom Wasserverteiler erstreckenden, aus der wenigstens einen Wasserverteilungsöffnung Wasser aufnehmenden Befeuchtungselement, und
- einem zur Reinigung des wenigstens einen Befeuchtungselements auf das wenigstens eine Befeuchtungselement mechanischen Stress auswirkenden Aktuator,
**dadurch gekennzeichnet, dass**
der Aktuator aus wenigstens einem dem wenigstens einen Befeuchtungselement benachbart angeordneten Rotor mit wenigstens einem Rotorblatt, das als auf das wenigstens eine Befeuchtungselement wirkender Schaber ausgebildet ist, und einem den Rotor in Rotation versetzenden Antrieb gebildet ist.

2. Luftbefeuchter nach Anspruch 1, **dadurch gekennzeichnet, dass** das Rotorblatt wenigstens eine Öffnung in der Blattfläche aufweist.

3. Luftbefeuchter nach einem der vorhergehenden Ansprüche, **gekennzeichnet durch** zwischen Wasserverteiler und Befeuchtungselementen angeordnete, elastisch verformbare Verteilerplatten, die teilweise innerhalb des Radius des Rotors angeordnet sind.

4. Luftbefeuchter nach einem der vorhergehenden Ansprüche, **dadurch gekennzeichnet, dass** der Boden des Wasserverteilers elastisch verformbar ausgebildet und teilweise innerhalb des Radius des Rotors angeordnet ist.

5. Luftbefeuchter nach einem der vorhergehenden Ansprüche, **dadurch gekennzeichnet, dass** bei einer Mehrzahl von Rotoren jeder Rotor von je einem Antrieb angetrieben wird, und eine Steuerung zum Ansteuern der Antriebe vorgesehen ist.

6. Luftbefeuchter nach einem der vorhergehenden Ansprüche, **dadurch gekennzeichnet, dass** sich bei einer Mehrzahl von Rotoren die von wenigstens zwei Rotoren überstrichenen Flächen überschneiden.

## Claims

1. Humidifier comprising
- a water distributor having a water connection that supplies water to the water distributor and at least one water distribution opening that discharges water,
- at least one humidification element that extends from the water distributor and receives water from the at least one water distribution opening, and
- an actuator which applies mechanical stress to the at least one humidification element in order to clean the at least one humidification element,
**characterized in that**
the actuator is formed from at least one rotor that has at least one rotor blade and is arranged adjacent to the at least one humidification element, which rotor blade is designed as a scraper that acts on the at least one humidification element, and a drive which rotates the rotor.

2. Humidifier according to claim 1, **characterized in that** the rotor blade has at least one opening in the blade surface.

3. Humidifier according to either of the preceding claims, **characterized by** elastically deformable distributor plates which are arranged between the water distributor and the humidification elements and are partially arranged within the radius of the rotor.

4. Humidifier according to any of the preceding claims, **characterized in that** the base of the water distributor is elastically deformable and is partially arranged within the radius of the rotor.

5. Humidifier according to any of the preceding claims, **characterized in that**, in the case of a plurality of rotors, each rotor is driven by one drive each, and a controller is provided for controlling the drives.

6. Humidifier according to any of the preceding claims, **characterized in that**, in the case of a plurality of rotors, the surfaces swept by at least two rotors overlap.

## Revendications

1. Humidificateur comportant
- un distributeur d'eau pourvu d'un raccordement d'eau qui alimente en eau le distributeur d'eau, et d'au moins une ouverture de distribution d'eau qui évacue l'eau,
- au moins un élément d'humidification s'étendant depuis le distributeur d'eau et recevant l'eau provenant de l'au moins une ouverture de distribution d'eau, et
- un actionneur qui exerce une contrainte mécanique sur l'au moins un élément d'humidification pour nettoyer celui-ci,
**caractérisé en ce que**
l'actionneur est formé d'au moins un rotor, comportant au moins une pale de rotor, disposé de manière adjacente à l'au moins un élément d'humidification, lequel rotor est conçu comme un racleur agissant sur l'au moins un élément d'humidification, et d'un entraînement qui fait tourner le rotor.

2. Humidificateur selon la revendication 1, **caractérisé en ce que** la pale de rotor présente au moins une ouverture dans la surface de l'aube.

3. Humidificateur selon l'une des revendications précédentes, **caractérisé par** des plaques de distribution élastiquement déformables disposées entre le distributeur d'eau et les éléments d'humidification, certaines plaques étant disposées dans le rayon du rotor.

4. Humidificateur selon l'une des revendications précédentes, **caractérisé en ce que** le fond du distributeur d'eau est élastiquement déformable et est partiellement disposé dans le rayon du rotor.

5. Humidificateur selon l'une des revendications précédentes, **caractérisé en ce que**, dans le cas d'une pluralité de rotors, chaque rotor est entraîné par un entraînement, et une commande est prévue pour commander les entraînements.

6. Humidificateur selon l'une des revendications précédentes, **caractérisé en ce que** les surfaces recouvertes par au moins deux rotors se chevauchent dans le cas d'une pluralité de rotors.
